**Europäisches Patentamt**

**European Patent Office**

**Office européen des brevets**

(19)

(11) Veröffentlichungsnummer: **0 193 023**
**B1**

(12) ## EUROPÄISCHE PATENTSCHRIFT

(45) Veröffentlichungstag der Patentschrift:
18.10.89

(51) Int. Cl.⁴: **C 08 G 69/28, C 08 G 69/26**

(21) Anmeldenummer: **86101726.7**

(22) Anmeldetag: **11.02.86**

(54) Verfahren zur Herstellung von Copolyamiden aus aromatischen Dicarbonsäuren, Adipinsäure, und Hexamethylendiamin.

(30) Priorität: 26.02.85 DE 3506656

(43) Veröffentlichungstag der Anmeldung:
03.09.86 Patentblatt 86/36

(45) Bekanntmachung des Hinweises auf die Patenterteilung:
18.10.89 Patentblatt 89/42

(84) Benannte Vertragsstaaten:
CH DE FR GB IT LI NL

(56) Entgegenhaltungen:
EP-A- 0 121 983
EP-A- 0 154 245
DE-A- 3 321 579

(73) Patentinhaber: BAYER AG,
D-5090 Leverkusen 1 Bayerwerk (DE)

(72) Erfinder: Nielinger, Werner, Dr., Bärenstrasse 21,
D-4150 Krefeld (DE)
Erfinder: Brinkmeyer, Hermann, Dr.,
Bodelschwinghstrasse 12, D-4150 Krefeld (DE)
Erfinder: Binsack, Rudolf, Dr., Bethelstrasse 4a,
D-4150 Krefeld (DE)
Erfinder: Bottenbruch, Ludwig, Dr., Wöhlerstrasse 5,
D-4150 Krefeld (DE)
Erfinder: Füllmann, Heinz-Josef, Dr., Am Schneeberg 31,
D-5653 Leichlingen 2 (DE)

ACTORUM AG

## Beschreibung

Gegenstand der Erfindung sind Verfahren zur Herstellung von Copolyamiden aus aromatischen Dicarbonsäuren, Adipinsäure und Hexamethylendiamin mit 30 bis 51,5 Gew.-% Einheiten des Hexamethylendipinsäureamids, indem man die Monomeren bei wenigstens 250°C und einem Druck von wenigstens 35 bar vorkondensiert und die Polykondensation in üblicher Weise zu Ende führt.

Polyamide wie Polyamid-6 und Polyamid-66 zeichnen sich durch grosse Härte, Steifigkeit und Wärmeformbeständigkeit aus. Sie sind widerstandsfähig gegen Abrieb und Verschleiss und beständig gegen eine Vielzahl von Chemikalien. Daher finden die Polyamide mannigfache Anwendung zur Herstellung von technischen Formkörpern wie beispielsweise in der Automobilindustrie.

Für viele Einsatzgebiete ist es jedoch notwendig, die Formkörper auch höheren Temperaturen auszusetzen. Dies gilt vor allem für die verstärkten Produkte. Bestimmte Copolyamide aus Adipinsäure, Terephthalsäure und Hexamethylendiamin erfüllen diese Forderung. Ihre Herstellung wird in der DE-PS 929 151 und ihre Verwendung zur Herstellung von Folien ist in der europäischen Patentanmeldung 34 757 beschrieben; ferner wird in der deutschen Offenlegungsschrift 29 27 018 ihre Verwendung als glasfaserverstärktes Material zur Extrusion von Profilen offenbart. Der Erweichungspunkt von Copolyamiden, die mehr als 18 Gew.-% Poly(hexamethylenterephthalamid) enthalten, steigt gemäss der britischen Patentschrift 11 14 541 auf über 265°C an, wogegen in DP 929 151 für Copolyamide mit 20 Gew.-% Poly(hexamethylenterephthalamid) ein Schmelzpunkt von 249°C angegeben ist. In der DOS 1 669 453 sind Polyamide aus Adipinsäure, Terephthalsäure und Hexamethylendiamin beschrieben, die als Nukleierungsmittel für Polyamidfasern verwendet werden können. Bedingt durch ihre hohen Schmelzpunkte sind diese Copolyamide nach den üblichen Verfahren im Autoklaven nur umständlich herstellbar. Zur Verbesserung der Herstellbarkeit von Copolyamiden aus Adipinsäure, Terephthalsäure und Hexamethylendiamin wird in DOS 1 745 076 der Zusatz von Sulfonamiden vor oder während der Polykondensation empfohlen. Hochschmelzende Copolyamide aus Terephthalsäure, Isophthalsäure, Adipinsäure und Hexamethylendiamin, Trimethylhexamethylendiamin sowie weiteren Diaminen sind in den europäischen Offenlegungsschriften 121 983, 121 984, 121 985, 122 688 und 123 377 beschrieben. Ihre Herstellung erfolgt, ausgehend von den Salzmischungen, unter Zusatz von vorzugsweise 13 – 17 % Wasser in einem mehrstufigen Verfahren, wobei das Wasser bei sehr hohen Temperaturen in einem Sprühverdampfer abgedampft wird.

Die Nachkondensation des erhaltenen Vorkondensates erfolgt in einer Doppelwellenschnecke. Das Verfahren ist aufwendig und schwierig durchzuführen. Die erforderlichen hohen Temperaturen können zu einer Schädigung des Polyamids führen. Auch das Verfahren gemäss DOS 33 21 579 und DOS 33 21 581 ist für die Herstellung der erfindungsgemässen Polyamide wenig geeignet, da die Schmelze dieser Produkte unter den angegebenen Bedingungen vorzeitig erstarren kann und die Polyamide nicht einwandfrei herstellbar sind.

Besonders geeignete Copolyamide sind solche mit mehr als 35 Gew.-% Hexamethylenterephthalamid-Einheiten, da deren Schmelztemperatur gegenüber der des Poly(hexamethylenadipamids) deutlich erhöht ist und ihre Einfriertemperatur oberhalb 75°C liegt. Die Eigenschaften dieser nach dem Stand der Technik hergestellten Copolyamide sind jedoch schwankend, so dass man nach den bekannten Verfahren keine reproduzierbaren Produkte erhält. Dies ist besonders dann der Fall, wenn man gemäss der Lehre des Standes der Technik die Vorkondensation bei Temperaturen um 220°C durchführt und lange Aufheizzeiten, wie bei der Herstellung im Autoklaven, erforderlich sind. So können sich Copolyamide gleicher Bruttozusammensetzung in Abhängigkeit von den Herstellungsbedingungen nicht nur im Schmelzpunkt um mehr als 10°C, sondern auch in der Einfriertemperatur um mehr als 5°C unterscheiden. Die nach dem Stand der Technik hergestellten Copolyamide sind ausserdem in Ameisensäure nicht vollständig löslich. Diese unlöslichen Teile verschlechtern die Zähigkeitseigenschaften des Copolyamids, da sie zur Rissbildung bei Schlagbeanspruchung führen können.

Überraschenderweise wurde nun gefunden, dass man Copolyamide mit verbesserten Eigenschaften aus Adipinsäure, Terephthalsäure, Isophthalsäure und Hexamethylendiamin reproduzierbar herstellt, wenn man die wässrige Lösung der Monomeren für die Vorkondensation sehr rasch auf eine Temperatur von wenigstens 250°C, vorzugsweise jedoch auf mindestens 260°C erhitzt und das erhaltene Vorkondensat nach bekannten Verfahren in der festen Phase nachkondensiert.

Gegenstand der Erfindung sind daher Verfahren zur Herstellung von homogenen, in Ameisensäure vollständig löslichen Polyamiden aus Adipinsäure, Terephthalsäure, Isophthalsäure und Hexamethylendiamin, wobei man eine 40 bis 70, vorzugsweise 45 bis 65 %ige wässrige Lösung der Monomeren in weniger als 15 min., vorzugsweise innerhalb von 1 bis 10 min. bei einem Druck von wenigstens 35 bar auf wenigstens 250°C, vorzugsweise auf 260 bis 360°C erhitzt und das Wasser bei Temperaturen von 260 – 360°C bei einem Druck von 1 – 40 bar, vorzugsweise 1 – 35 bar, in einer oder mehreren Stufen abdestilliert, wobei ein Vorkondensat mit einer relativen Viskosität von 1,2 bis 2,5, bevorzugt 1,6 bis 2,4, erhalten wird, das bei Normaldruck in bekannter Weise nachkondensiert wird.

Zur Herstellung des Copolyamids ist beispielsweise eine Vorrichtung, wie sie in der amerikanischen Patentschrift 2 361 717, Fig. I beschrieben ist, geeignet.

Die erfindungsgemäss hergestellten Copolyamide bestehen aus 30 – 51,5 Gew.-% Hexamethylenadipinamid-Einheiten und 70 – 48,5-Gew.-% Einheiten von Hexamethylenterephthalamid-Isophthalamid, wobei der Terephthalamidanteil 48,5 – 60, vorzugsweise 48,5 – 55 Gew.-% beträgt.

Die Copolyamide, die nach dem erfindungsgemässen Verfahren hergestellt wurden, sind in Ameisensäure glatt löslich. Sie haben gegenüber den nach bekannten Verfahren hergestellten Produkten eine höhere Glastemperatur und verbesserte Zähigkeit und verringerte Wasseraufnahme. Sie lassen sich auf handelsüblichen Maschinen wie Spritzgussmaschinen oder Extrudern verarbeiten.

Den erfindungsgemäss hergestellten Copolyamiden können die üblichen Zusätze und Hilfsmittel wie Gleit- und Entformungsmittel, sowie Stabilisatoren und Brandschutzmittel zugesetzt werden, ferner Füllstoffe, insbesondere Glasfasern in Mengen von 10 bis 60 Gew.-%, bezogen auf die gesamte Mischung. Als weitere Füll- und Verstärkungsstoffe kommen Mikroglaskugeln, Kreide, Quarze wie beispielsweise Novaculit und Silikate wie Asbest, Feldspat, Glimmer, Talkum, Wollastonit sowie Kaolin in kalzinierter und nicht kalzinierter Form in Betracht. Ausserdem sind Farbstoffe und Pigmente, insbesondere Farbrusse und/oder Nigrosinbasen zu nennen, ferner Schlagzähmodifikatoren, beispielsweise auf der Basis von Copolymerisaten des Ethylens, Poly-(meth)acrylaten und gepfropften Polybutadienen.

Die Copolyamide sind besonders zur Herstellung von Formkörpern vielfältiger Art wie Spritzgussteilen, Platten, Folien und Fasern geeignet. Sie werden insbesonders zur Herstellung von Maschinenbauteilen, von technischen Geräten und im Automobilbau eingesetzt. Ein weiteres Einsatzgebiet ist der Elektrosektor. Sie lassen sich insbesondere zur Herstellung von bei höheren Temperaturen oxidationsbeständigen Folien- und Chemikalien-beständigen Teilen wie Behältern verarbeiten.

**Beispiele**

Für die kontinuierliche Herstellung des Copolyamides wurde die in der US-Patentschrift 2 361 717, Fig. 1, beschriebene Apparatur verwendet.

Beispiel 1

Man pumpt eine 50 %ige wässrige Salzlösung, die 15,38 Tl. Terephthalsäure, 1,17 Tl. Isophthalsäure, 12,20 Tl. Adipinsäure und 22,10 Tl. Hexamethylendiamin (darin sind 4 Mol-% Überschuss enthalten) besteht, aus einer auf 95 °C beheizten Vorlage mit einem Druck von 30 bar durch eine auf 300 °C beheizte Rohrschlange von 6 m Länge und mit einem Durchmesser von 4 mm. Der Durchsatz an Salzlösung beträgt 1 000 g/h. Danach strömt das Reaktionsgemisch durch eine weitere Rohrschlange von 6 m Länge und 4 mm Durchmesser die auf 340 °C beheizt ist. Über ein Ventil wird dann in ein 4 m langes Rohr von 4 mm Durchmesser entspannt, wobei der Druck auf Normaldruck abfällt. Die aus dem Rohr austretende Polyamidschmelze wird in Wasser gekühlt und granuliert. Das Granulat hat eine relative Viskosität von 2,1, gemessen an einer einprozentigen Lösung in m-Kresol bei 25 °C in einem Ubbelohde-Viskosimeter. Das Polyamid wird diskontinuierlich in einem Taumeltrockner in 8 Std. bei 190 °C in Stickstoffstrom auf eine Viskosität von 3,5 in der festen Phase nachkondensiert.

Das Polyamid kann bei 320 °C zu Formkörpern verarbeitet werden. Es hat eine Schlagzähigkeit von 110 kJ/m$^2$, eine Biegefestigkeit von 143 MPa und eine Wärmeformbeständigkeit (Vicat B) von 250 °C. Das Schmelzmaximum (DTA, 2. Aufheizen) ist bei 295 °C.

Beispiel 2

Nach dem in Beispiel 1 beschriebenen Verfahren wird aus einer wässrigen Salzlösung aus 16,11 Teilen Terephthalsäure, 1,46 Teilen Isophthalsäure, 11,22 Teilen Adipinsäure, 22,15 Teilen Hexamethylendiamin (darin sind 4,5 Mol-%, bezogen auf das Diamin, im Überschuss enthalten) und 50 Teilen Wasser, ein niedrigviskoses Polyamid mit einer relativen Viskosität von 2,1 erzeugt. Die Nachkondensation in der Festphase liefert nach 8 Stunden bei 190 °C im Stickstoffstrom ein Copolyamid mit einer Viskosität von 3,3.

Beispiel 3

Nach dem in Beispiel 1 beschriebenen Verfahren wird aus einer wässrigen Salzlosung aus 16,12 Teilen Terephthalsäure, 2,93 Teilen Isophthalsäure, 9,82 Teilen Adipinsäure, 22,18 Teilen Hexamethylendiamin (darin sind 5 Mol-%, bezogen auf das Diamin, im Überschuss enthalten) und 50 Teilen Wasser ein niedrigviskoses Polyamid mit einer relativen Viskosität von 2,1 hergestellt. Die Nachkondensation in der Festphase liefert nach 8 Stunden im Stickstoffstrom bei 190 °C ein Copolyamid mit einer relativen Viskosität von 3,5.

**Patentansprüche**

1. Verfahren zur Herstellung von Copolyamiden aus Adipinsäure, Terephthalsäure, Isophthalsäure und Hexamethylendiamin, dadurch gekennzeichnet, dass man in Ameisensäure-lösliche Copolyamide aus 30–51,5 Gew.-%. Einheiten von Hexamethylenadipinamid und 70–48,5 Gew.-% Einheiten von Hexamethylenterephthalamid und -Isophthalamid, deren Terephthalamidanteil 48,5–60 Gew.-% beträgt, dadurch herstellt, dass man eine 40–70 %ige, wässrige Losung der Monomeren in weniger als 15 min bei einem Druck von wenigstens 35 bar auf wenigstens 250 °C erhitzt und das Wasser in einer oder mehreren Stufen bei einem Druck von 1–40 bar abdestilliert, wobei ein Vorkondensat mit einer relativen Viskosität von 1,2 – 2,5 erhalten wird, das in bekannter Weise in der festen Phase nachkondensiert wird.

2. Verfahren nach Anspruch 1, dadurch gekennzeichnet, dass man eine 45–65 %ige wässrige Lösung der Monomeren innerhalb von 1–10 min auf 260–360 °C erhitzt.

3. Verfahren nach Anspruch 1 oder 2, dadurch gekennzeichnet, dass man bis zu einer relativen Viskosität von 1,6–2,4 vorkondensiert.

4. Verfahren nach Ansprüchen 1–3, dadurch gekennzeichnet, dass man das Wasser bei Drukken von 1–35 bar abdestilliert.

## Revendications

1. Procédé pour la fabrication de copolyamides à partit d'acide adipique, d'acide téréphtalique, d'acide isophtalique et d'hexaméthylènediamine, caractérisé en ce que l'on fabrique des copolyamides solubles dans l'acide formique à partir de 30–51,5% en poids de motifs d'hexaméthylèneadipamide et 70–48,5% en poids de motifs d'hexaméthylènetéréphtalamide et d'hexaméthylèneisophtalamide, dont la fraction de téréphtalamide est de 48,5–60% en poids, en chauffant en moins de 15 min une solution aqueuse des monomères à 40–70% à au moins 250 °C sous une pression d'au moins 35 bars et en distillant l'eau en une ou plusieurs étapes sous une pression de 1-40 bars, en obtenant un précondensé en phase solide de manière connue.

2. Procédé selon la revendivation 1, caractérisé en ce que l'on chauffe une solution aqueuse des monomères à 45–65% à 260–360 °C en 1–10 min.

3. Procédé selon la revendication 1 ou 2, caractérisé en ce que l'on effectue la précondensation jusqu'à une viscosité relative de 1,6–2,4.

4. Procédé selon les revendications 1–3, caractérisé en ce que l'on distille l'eau sous des pressions de 1–35 bars.

## Claims

1. A process for the production of copolyamides of adipic acid, terephthalic acid, isophthalic acid and hexamethylenediamine, characterized in that copolyamides soluble in formic acid – of 30–51.5% by weight hexamethylene adipic amide units and 70–48.5% by weigt hexamethylene terephthalamide and isophthalamide units, of which the terephthalamide content is 48.5–60% by weight, are prepared by heating a 40–70% aqueous solution of the monomers to at least 250 °C in less than 15 minutes under a pressure of at least 35 bar and distilling off the water in one or more steps under a pressure of 1 to 40 bar, a precondensate having a relative viscosity of 1.2–2.5 being obtained, the precondensate thus obtained then being subjected to postcondensation in the solid phase in known manner.

2. A process as claimed in claim 1, characterized in that a 45–65% aqueous solution of the monomers is heated in 1–10 minutes to 260–360 °C.

3. A process as claimed in claim 1 or 2, characterized in that precondensation is continued to a relative viscosity of 1.6–2.4.

4. A process as claimed in claims 1 to 3, characterized in that the water is distilled off at pressures of 1–35 bar.